# EUROPEAN PATENT APPLICATION

(11) **EP 1 276 319 A1**
(43) Date of publication of application: **15.01.2003**
(21) Application number: 01830467.5
(22) Date of filing: 13.07.2001
(51) Int. Cl.: H04N 7/088, H04N 5/445, H04N 7/173

(54) **Advanced method and system for interactive television**

(71) Applicant: Tv-Lab S.p.a., 31033 Castelfranco Veneto (Prov. of Treviso) (IT)
(72) Inventor: Vazzoler, Alberto, 98000 Monte Carlo (MC); Straus, Stefano, 31033 Castelfranco Veneto (IT)
(74) Representative: Modiano, Guido, Dr.-Ing.

(57) **Abstract**

A receiver (10), particularly a set top box, is provided with a tuner (11) for receiving a television signal (80) which comprises Teletext data (52); a device (17) for exchanging information over a data communications network (81), and a processing unit (14) capable of processing the received Teletext data in order to identify the television channel to which the receiver is currently tuned and to generate or retrieve remotely information (86) related to the program being broadcasted. This information (86) can be combined with the television signal and displayed on the screen (20) and/or reproduced simultaneously or alternately to the signal.

## Description

The present invention relates to an advanced method and system applied to the field of interactive television, with particular reference to the reception, analysis and reuse of information contained in the Teletext signal transmitted conventionally by a station together with the audiovisual data related to the television program currently being broadcast. In particular, the described system relates to a receiver, such as a so-called set top box, provided with an interface for communication with an external data communications network that can be navigated by the user.

The expression "interactive television" is used to designate a receiver, hereinafter generally designated by the expression "set top box", which is capable of receiving the television signal and of adding thereto information from other sources.

In particular, as the Internet becomes widespread and data communications networks in general are improved, various currently available set top boxes are capable of acting both as a television signal receiver and as a device for network navigation.

Among them, set top boxes are known which are capable of receiving and simultaneously displaying on the screen television programs and data from the Internet, allowing the user to navigate through the various sites while allowing him to continue to view the television program to which the set top box is tuned, by way of conventional electronic circuits which mix the various signals into a single frame.

The technology that allows to display a window containing information from a first source together with information from a second source is generally designated herein by the acronym PIP (picture in picture). Substantially, the information from the first source is displayed in a first window of the screen, while the information from the second source is displayed in one or more different areas.

By using PIP technology it is of course possible to provide a plurality of windows and display information from more than two sources as well. However, for the sake of simplicity, reference is made in the present context to a system which uses information from two sources, although it remains expressly understood that in the implementation of the invention described hereinafter this choice must not be interpreted in a limitative sense.

One problem which is strongly felt in the context of interactive television is the mutual correlation of the items of information displayed in the various areas provided on the screen and received from independent sources, which although displayed all together on the screen, are entirely separate from a logical standpoint.

In particular, the main problem encountered in performing this correlation consists in recognizing the television program to which the set top box is tuned at a given moment, even in the case of an analog broadcast. Since broadcasting frequencies are different depending on the geographical area where the service is provided, it is in fact not sufficient to identify the frequency to which the receiver is tuned in order to know assuredly the identity of the station.

The aim of the present invention is to provide a method and a system for receiving and analyzing the broadcast television signal, so as to obtain information related to the channel, the broadcast time and the program to which the receiver is currently tuned.

Within this aim, an object of the present invention is to display on the user's screen a first item of information generated starting from the analysis performed, for example the time and channel being displayed.

Another object of the present invention is to transfer at least part of the information received and/or processed to a remote post by means of a second communication channel, for statistical purposes and for the retrieval of information related to the television program to which the receiver is tuned.

Another object of the present invention is to provide the user, according to the received information, with interactive services which are pertinent to the program being displayed.

This aim and these and other objects which will become better apparent hereinafter are achieved by a receiver for interactive television, particularly a set top box, comprising: a tuner, adapted to receive a television signal which comprises Teletext data; means for identifying, by means of the received Teletext data, the television station that is broadcasting the television signal, the current time and date; means for generating a second signal whose content is based on information related to the broadcasting station, the date and the time.

Advantageously, the receiver can comprise means for generating a video frame or an audio signal which comprises information from the television signal, from the second signal or from a combination of both.

Conveniently, the receiver can comprise communications means for exchanging information with a remote location, for example a server of a service provider or a website.

Advantageously, the second signal is generated starting from the information related to the broadcasting station, the date and the time by using data contained in at least one of the following: a local memory, a remote server, a website or additional information contained in said Teletext data. These data can also include active information which can be selected onscreen by the user, such as links to websites.

Further characteristics and advantages of the present invention will become better apparent from the following detailed description, given by way of non-limitative example and illustrated in the accompanying figures, wherein:
Figure 1 is a schematic view of an embodiment of the system according to the invention;
Figure 2 is a schematic view of the fields contained in a database used to retrieve information related to the various television broadcasts according to station schedules;
Figure 3 is a flowchart which illustrates schematically the steps followed by the set top box to manage the data received in input and generated in output;
Figure 4 illustrates some possible configurations of a display device in which areas meant to display signals from different sources are provided.

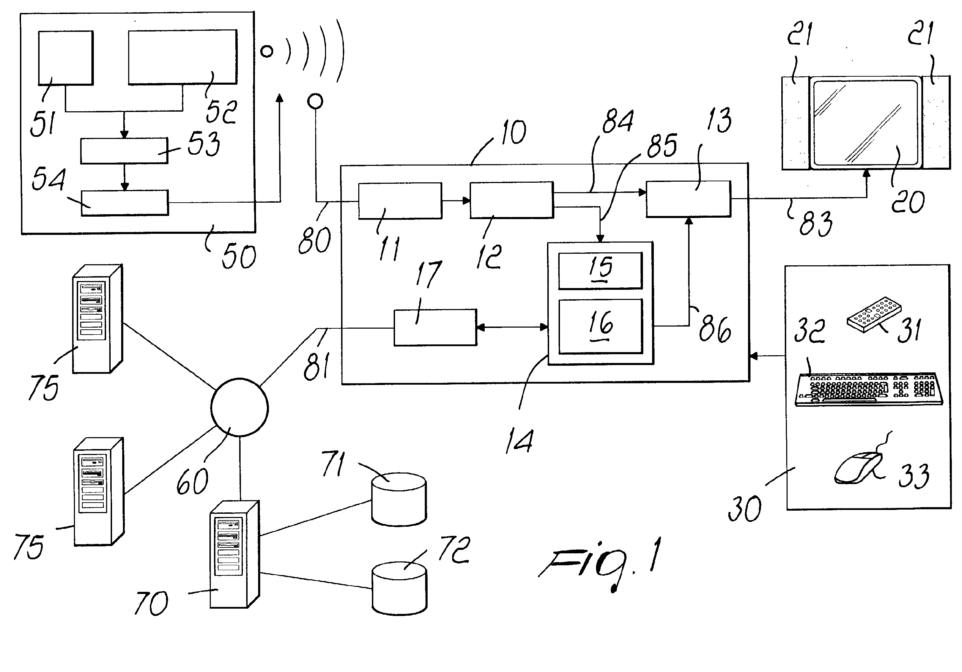

Figure 1 is an overall diagram of a preferred embodiment of the system according to the present invention. The system comprises a generic television transmitter 50, a set top box 10, a display device 20 connected in output to the set top box, input means 30 which allow to send commands to the set top box, and a server 70 of a service provider.

The television transmitter 50 in turn comprises a source 51 of a television signal, which includes the audio and video data that constitute the part of the program to be broadcast at each instant, and a source 52 of Teletext signal, which as is known contains data of different kinds which can be displayed at the user's request as an alternative to, or together with, the broadcast television program. Usually, the Teletext data (hereinafter also designated simply as "Teletext") sent by a broadcasting station comprise various kinds of information, such as current news, weather information, stock exchange data, and so forth, which can vary among stations.

The Teletext data are identified by means of a number formed by two parts: "magazine" and "page". There are eight magazines, identified by the numerals 0 to 7, where 0 identifies the eighth magazine; the page number is a number between 0 and 99. For example, the code 324 identifies page 24 of magazine number 3.

Each screen of Teletext is constituted by 24 horizontal lines: however, in some cases more than 24 lines are sent and contain non-visible information intended, for example for some kinds of specific decoder or receiver.

In any case, each broadcasting station transmits repeatedly, approximately once per second, the Teletext packet identified as 8/30 and generally known as Television Service Data Packet. This packet always contains at least the current time and a station identifier, together with other information, such as the default page to display, which is usually page 00 of magazine 1, i.e., the page identified by the label "100".

The television signal in output from the source 51 and the Teletext data in output from the source 52 are mixed in a conventional manner by a combining unit 52, so as to obtain a single stream in output. The Teletext data, including packet 8/30, are inserted in a conventional manner in the audiovisual signal in the vertical blanking interval lines.

The signal thus combined is modulated by the modulator 54 and broadcast so as to be received by the set top box 10 according to the present invention.

The set top box 10 comprises a tuner 11, a demodulator 12, a processing unit which in turn comprises a CPU 15 and one or more memory banks 16, electronic circuits 13 for generating a television picture and a communications device 17.

The memory 16 is constituted by any combination of ROM memory, RAM memory, EPROM memory and mass storage units, such as for example a hard disk or any other similar medium.

The communications device 17 can be a modem, an ISDN adaptor, a network card, an ADSL adapter or any other device required to work on the communications channel 81, which is described hereinafter.

The set top box 10 is also connected in output to a display device 20, such as for example a television screen or a monitor, and to an audio playback device, for example speakers 21 optionally included in the display device itself.

The set top box 10 can further receive commands from one or more input devices 30, such as a remote control 31, a keyboard 32, a pointing device 33.

The communications device 17 allows both to navigate a data communications network 61, particularly the Internet, and to specifically exchange information with a server 70 which is operated by a service provider and runs a software application capable of interacting with the databases 71 and 72 and optionally with additional databases operated by external service providers 75, as will become better apparent from the description that follows.

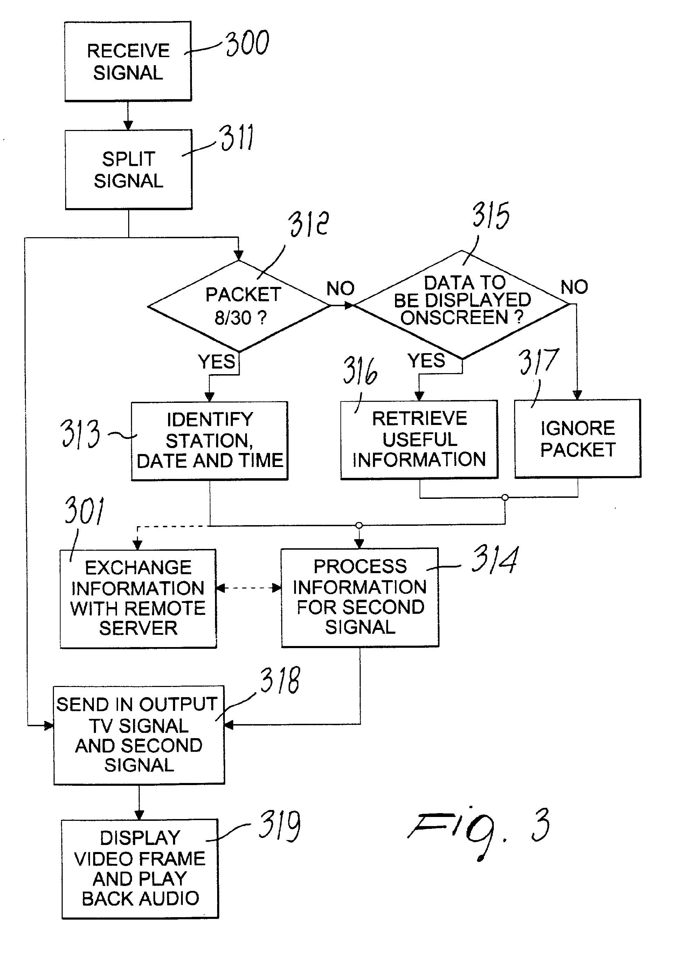

The operation of the system according to the present invention is partially shown schematically in the flowchart of Figure 3 and is as follows.

The signal sent by the transmitter 50 is received (301) in input, through the channel 80, by the tuner 11 and demodulated by the demodulator 12. The block 12 also designates conventional electronic circuits capable of separating (311) the television signal 84 from the Teletext data 85. The Teletext data 85 are routed to the processing unit 14, which identifies (313) the station and the current time by reading the information contained in the packet 8/30, after of course checking (312) the received packet.

At any time, the processing unit 14 can process data (314) and exchange and receive (301), by means of the communications channel 81, information also from a data communications network 60, for example the Internet, both at the user's request and spontaneously in order to generate a second output signal which contains audio and video 86.

This second or additional signal 86 is combined with the audiovisual signal 84 and sent (318) in output from the set top box to be displayed and played (319) on the video device 20 and on the audio device 21, simultaneously or alternatively with respect to the picture and sound contained in the television signal 84.

In a first simple case, the processing unit 14 generates video signals which simply contain the station identifier and the current time, without having to interact with the external server 70. This is a first step toward correlation among the various windows that are present on the screen.

However, the system according to the present invention provides most of all for the possibility to use the information retrieved by analyzing the Teletext signal 85 in order to provide new services, both merely informational ones for the benefit of the user and commercial ones for the benefit of users and suppliers.

In a first embodiment, the Teletext information received and optionally already processed by the processing unit 14 is sent by means of the communications device 17 to the server 70 and stored in a database 71, so as to provide detailed information on the television preferences of users.

In a second embodiment, the same data are used to return to the user information on the program to which he is currently tuned, for example the summary of a film during its screening, data related to a championship during a match, stock exchange data during a financial broadcast, information on the presenter or trivia during a quiz game or talk show.

The information displayed is retrieved in the database 72 by an appropriately provided software application designed to retrieve data associated with the program that the user is displaying by comparing the time, date and channel data sent by the set top box 10 at a given time.

The returned information can be static or dynamic, the latter term meaning that it can vary moment by moment depending on the time when it is downloaded (for example in the case of stock quotes or results of other soccer matches). In both cases, the information can be retrieved directly from a second database 72 operated by the server 70 or from additional servers or websites 75.

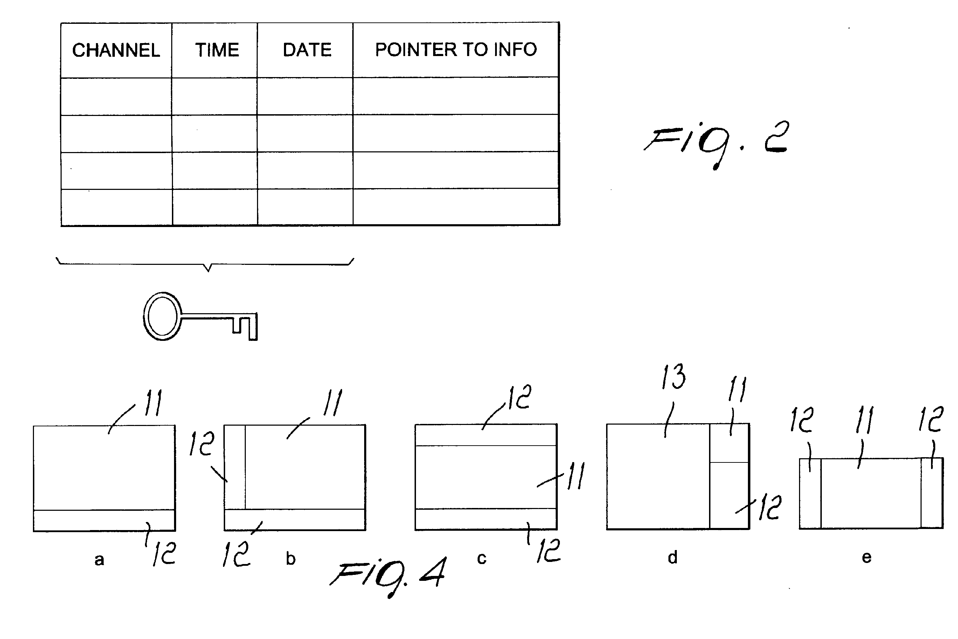

According to an embodiment shown in Figure 2, the database 72 comprises at least the "channel", "time", "date" and "pointer to info" fields. The first three fields constitute a primary key of the database to be used to search for the location from which the information related to the program to which the set top box 10 is currently tuned is to be downloaded. The fourth field is the pointer to the local or remote location from which the information to be returned to the set top box is to be retrieved.

The information that is sent can of course be of various kinds: merely passive, for example simple data to be displayed, such as program title and duration and so forth; or interactive, for example a link to a website which is to be displayed on the user's screen 20 and can therefore be selected by means of one of the input devices 30, for example the pointing device 33.

In a different embodiment of the present invention, which can be used as an alternative or integration to the above-described embodiment, the information related to specific programs can be retrieved directly from the data 85 received from Teletext (steps 315, 316, 317 in the flowchart of Figure 3).

For example, the memory 16 can contain information, which can also be remotely modified by sending appropriate commands from the server 70, which is related to the data structure of the Teletext of the station to which the tuner 11 is currently tuned, so as to retrieve information to be displayed together with the video signal 84, said information also being fully or partially stored in the memory 16.

For example, during the screening of a film the user can use the input means 30 to request its summary, if available, which can be retrieved directly from a given page of the Teletext. Or, during the broadcast of a financial news program, the set top box can scroll on the screen 20 the information related to stock exchange data received in some pages of the Teletext. The Teletext of each station in fact tends to maintain a structure which is constant over time, thus requiring only occasional updates of the memory 16 by the server 70.

Moreover, it is evident that at a certain instant the screen 20 can display any information, such as weather information, program schedules and so forth, as well as specific pages requested by the user by means of the input devices 30. Of course, the set top box thus conceived can also be used as a replacement of Teletext itself.

In each one of the cases described above by way of non-limitative example, the processing unit 14 produces in output audio/video information 86, which is combined with the audio/video information related to the television signal 84 by means of conventional electronic circuits 13 and is finally sent to the display means 20 and audio playback means 21.

The combination of the information performed by the circuit 13 can generate a visualization on the device 20 in various modes: a first mode, in which only the television signal 84 is displayed; a second mode, in which only the signal 86 is displayed; a third mode, in which both signals 84 and 86 are displayed, optionally after resizing the frame that contains the television signal.

Figure 4 illustrates various possible combinations between the area 11 for displaying the television signal 84 and the area 12 for displaying the additional signal 86.

In particular, Figure 4d illustrates a case in which there are more than two information sources, for example the case in which the television signal 18 is displayed in the area 11, the additional signal 19 is displayed in the area 12, and the conventional Teletext signal is displayed in the area 13.

The illustrated configurations are of course presented only for demonstration purposes. In particular, moreover, the areas into which the screen 20 is divided can overlap transparently in order to generate superimposed elements, and likewise the television signal display area 11 can be resized or can retain its normal size, also depending on the type of screen 20 that is used and on the type of television signal 84 that is received. With reference to Figure 4c, for example, in the case of the broadcast of a 16:9 program displayed on a conventional 4:3 screen, the presence of the areas 12 does not require resizing of the television frame 11, since it is possible to utilize the two excess top and bottom horizontal bands. The same applies to Figure 4a in the case of reception of a 4:3 television signal displayed on a 16:9 screen.

It has thus been shown that the present method and system achieve the intended aim and objects. In particular, it has been shown that the set top box thus conceived allows to correlate the television signal received from a television station with the program that is actually displayed, in order to provide the user with informational and/or interactive services. Clearly, numerous modifications are evident and can be promptly provided by the person skilled in the art without abandoning the scope of the protection of the present invention. For example, it is obvious for the person skilled in the art to acquire the current date and time information not from the Teletext signal, as shown, but from an internal clock that is present in the set top box or in the server 70. It is also evident that the inventive concept on which the present invention is based is independent of the physical location and method with which the Teletext data processing is performed to retrieve the information related to the station, since said processing can be performed directly on the set top box 10 or on the server 70 by means of a software program or by an appropriately provided hardware chipset capable of autonomously identifying the packets marked for station identification, which can also be other packets instead of said packet 8/30. Accordingly, the scope of the protection of the claims must not be limited by the illustrations or preferred embodiments shown in the description as examples, but rather the claims must include all the patentable novelty characteristics that reside in the present invention, including all the characteristics that would be treated as equivalent by the person skilled in the art.

## Claims

1. A receiver for interactive television, comprising:
-- a tuner, adapted to receive a television signal which comprises Teletext data;
-- means for identifying, by means of said Teletext data, the television station that is broadcasting said television signal; the time; and the current date;
-- means for generating a second signal whose content is based on information related to said broadcasting station, said date and said time.

2. The receiver according to claim 1, further comprising at least one of the following:
-- means for generating a video frame which comprises information from said television signal, from said second signal or from a combination of both;
-- means for generating an audio signal which comprises information from said television signal, from said second signal or from a combination of both.

3. The receiver according to claims 1 or 2, comprising communication means for exchanging information with a remote location.

4. The receiver according to claim 3, **characterized in that** said communication means are selected from the group that comprises:
-- a modem; an ADSL adaptor; an ISDN adaptor; a generic network card adapted to send and receive a signal over a data communications network.

5. The receiver according to claims 3 or 4, **characterized in that** said means for generating a second signal starting from the information related to said station, said date and said time use data contained in at least one of the following: a local memory; a remote server; a website; additional information stored in said Teletext data.

6. The receiver according to claim 5, **characterized in that** said second signal includes data which, once displayed on a screen connected to said receiver, can be selected by means of a pointing device in order to produce an exchange of information with a location which is remote with respect to said receiver.

7. A method for interactive television, comprising the steps of:
-- receiving, by means of a receiver, a television signal which comprises Teletext data;
-- identifying the television station by means of said Teletext data;
-- identifying the current time and date;
-- generating a second signal whose content is based on information related to said station, said date and said time.

8. The method according to claim 7, further comprising at least one of the steps of:
-- displaying on a screen said first signal, said second signal or a combination of the two;
-- performing audio playback of said first signal, said second signal or a combination of the two.

9. The method according to claims 7 or 8, **characterized in that** said second signal is generated by downloading information contained in a storage means.

10. The method according to claim 9, **characterized in that** said storage means are selected from the group that comprises:
-- a volatile or permanent archive on board said receiver;
-- a volatile or permanent archive located remotely with respect to said receiver.

11. The method according to claim 10, **characterized in that** said second signal includes data which, once displayed on said screen, can be selected by means of a pointing device in order to produce an exchange of information with a post located remotely with respect to said receiver.
